# EUROPEAN PATENT APPLICATION

(11) **EP 1 787 708 A1**
(43) Date of publication of application: **23.05.2007**
(21) Application number: 06380305.0
(22) Date of filing: 22.11.2006
(51) Int. Cl.: B01D 53/14, B08B 9/08

(54) **Device and method to eliminate explosive atmospheres in tanks for storage of liquid petroleum products**

(30) Priority: 22.11.2005 ES 200502859
(71) Applicant: Albemarna, S.L., 46260 Alberic (Valencia) (ES)
(72) Inventor: Martinez Navarrete, Rafael, 46260 Alberic (ES)
(74) Representative: Ungria Lopez, Javier

(57) **Abstract**

The method consists of a degasification process of the enclosure by means of introducing vaporised fluid which captures the organic fumes of the fuel precipitating them to the floor and creating a superficial barrier which prevents the new emission of these fumes until they have been removed in the cleaning process.

It has application in confined storage enclosures for liquid petroleum products and similar (tanks, vaults, basements, ditches, etc.).

The device for carrying out this method consists of a base plate (4) which seals the opening (2) of the tank or enclosure (3) to be degasified. It is provided with a sprayer pipe (5) with an inlet for outside air (8) and an outlet mouth (9), an inlet for water under pressure (10) in order to provoke the spraying, and a duct (6) for evacuation eliminating over-pressures during the spraying. There exists an additional duct (7) for introduction of accessories.

## Description

### OBJECT OF THE INVENTION

As stated in the title of this descriptive specification, the present invention relates to a method for the control, degasification and elimination of explosive atmospheres in confined enclosures for storage of liquid petroleum products and similar and corresponding device, these enclosures normally being metal tanks or those made of glass fibre reinforced plastic and/or their corresponding vaults. It has application in confined enclosures for storage of liquid petroleum products and similar (tanks, vaults, basements, ditches, etc.).

The usual maintenance work in confined enclosures for storage of liquid petroleum products (cleaning of tanks due to change of fuel or due to their being dirty, periodical tests on sealing, work on repair and lining of tanks, replacement or repair of pipes in vaults, etc.) requires working inside these enclosures which usually have an explosive atmosphere.

It is therefore fundamental to degaslfy and eliminate the presence of fuel fumes in these atmospheres in order to be able to work under conditions of safety with regard to possible deflagration or asphyxiation and/or intoxication of the people carrying out these tasks.

### PRIOR ART OF THE INVENTION

The prior art known in this field is focused on the suction of organic fumes by mechanical means and projecting them into the atmosphere directly or passing them through filters (activated carbon for example); or the introduction of air by mechanical means which displace the organic fumes of the fuel and channel them to the atmosphere directly or pass them through filters as in the same way as above.

The drawbacks presented by these two methods could be listed as follows:
- The emission of organic fumes from a tank to the outside represents a serious risk for the safety of people, since as these fumes are heavier than air the danger exists of creating a mist on the ground leading to possible deflagration or asphyxiation and/or intoxication of the people carrying out these tasks.
- If the organic fumes are also sucked mechanically from the outside, there exists the danger that, on passing through the mechanical element sucking them, the hot points of that element could cause the mixture to ignite.
- The emission of organic fumes into the atmosphere implies environmental contamination.
- These are slow processes which, moreover, do not guarantee the entire elimination of the hazardous gases during the work phase by the operators.
- Given the highly volatile components which the products contain, this means that dangerous fumes are continually being regenerated.

### DESCRIPTION OF THE INVENTION

In general, the method for the control, degasification and elimination of explosive atmospheres in confined enclosures for storage of liquid petroleum products and similar which the invention proposes consists of first emptying the tank and then blowing water inside in a sprayed or atomised state in the form of very fine drops for a period of time in proportion to the size of the same, with prior partial blocking of the mouth of the tank.

The sprayer device is then withdrawn and the tank is entered inside in order to effect the appropriate maintenance operations.

Moreover, the sprayer device for carrying out the described method consists of:
- A base for its support in the mouth of the tank or enclosure.
- A sprayer pipe with an inlet for outside air and an outlet mouth.
- An inlet for water under pressure for spraying by the Venturi effect, at a pressure of between 50 and 120 bars.
- A duct for the exit of the interior pressure of the tank during the process of spraying and/or capture of hazardous fumes.
- A duct for the introduction of accessories such as suction devices for liquids, etc.
- Pressure equipment for achieving the bars necessary for the phase of spraying the water.
- A water outlet mouth inside the pipe for creating the desired atomisation.

In the method of degasification of the enclosure, when the vaporised fluid which captures the organic fumes of the fuel is introduced, a precipitate is obtained which falls to the floor and a superficial barrier is created which prevents the new emission of these fumes until they have been removed in the cleaning process.

In order to facilitate the understanding of the characteristics of the invention and forming an integral part of this descriptive specification, some plans are attached containing figures in which, on an illustrative rather than limiting basis, the following has been represented.

### BRIEF DESCRIPTION OF THE DRAWINGS

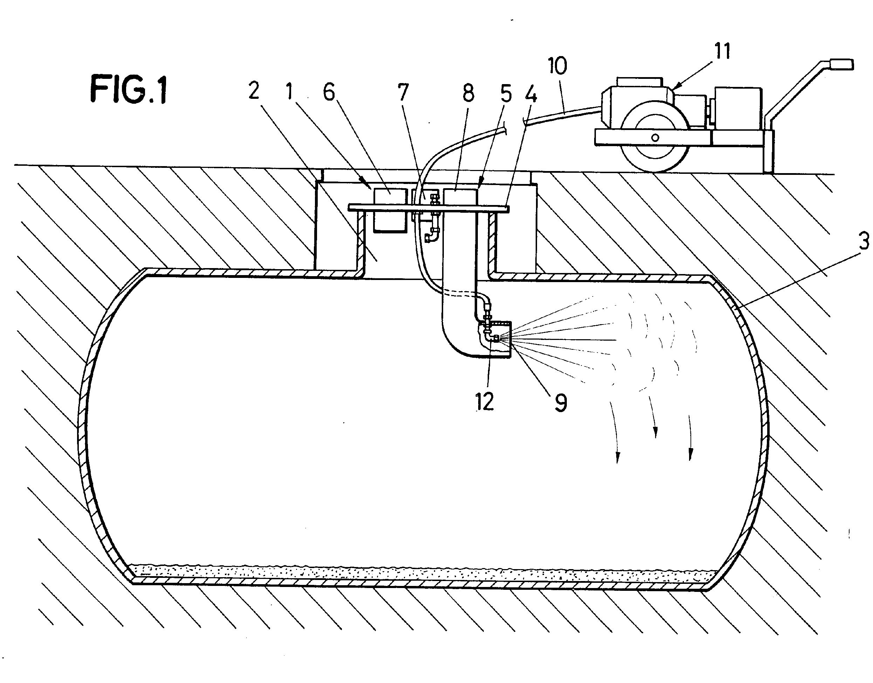

**Figure 1.-** Is a schematic view of a device for the control, degasification and elimination of explosive atmospheres in confined enclosures for storage of liquid petroleum products and similar, coupled to the filling mouth of a tank.

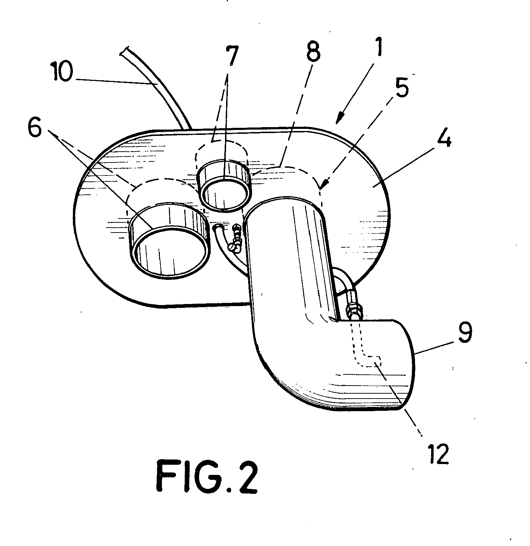

**Figure 2.-** Is a perspective view from the lower part of the device.

### DESCRIPTION OF THE PREFERRED FORM OF EMBODIMENT

Making reference to the numbering adopted in the figures, we can see that the device which we are concerned with is referenced in general with the number 1 and is coupled to the mouth 2 of the tank 3.

It includes the base plate 4 provided with pipes 5, 6 and 7.

The pipe 5 is bent and belongs to the sprayer device. It has an inlet for outside air 8 and a exit mouth 9.

The pipe 6 defines the duct for the exit of gases when the pressure inside the tank 3 increases during the spraying. As we said earlier, this duct can be used for capturing hazardous fumes.

The pipe 7 is an additional pipe through which other accessory elements can be introduced for measurement or cleaning.

The reference 10 designates the inlet for water under pressure from the outside pressure equipment 11.

The exit mouth for sprayed or atomised water inside the tank is referenced with number 12.

## Claims

1. **METHOD FOR THE CONTROL, DEGASIFICATION AND ELIMINATION OF EXPLOSIVE ATMOSPHERES IN CONFINED ENCLOSURES FOR STORAGE OF LIQUID PETROLEUM PRODUCTS AND SIMILAR**, for degasifying and eliminating the presence of fuel fumes in these atmospheres following the emptying of the tank or enclosure, **characterised in that** it consists of blowing water inside in a sprayed or atomised state in the form of very fine drops for a period of time in proportion to the size of the tank, with prior partial blocking of the filling mouth thereof; withdrawing of the sprayer device; and entering inside for the appropriate maintenance operations to be effected by specialised personnel.

2. **DEVICE FOR THE CONTROL, DEGASIFICATION AND ELIMINATION OF EXPLOSIVE ATMOSPHERES IN CONFINED ENCLOSURES FOR STORAGE OF LIQUID PETROLEUM PRODUCTS AND SIMILAR**, for degasifying and eliminating the presence of fuel fumes in these atmospheres following the emptying of the corresponding tank or enclosure, **characterised in that** it consists of a base plate (4) for support in the mouth (2) of the tank or enclosure (3), provided with a sprayer pipe (5) with an inlet for outside air (8) and an outlet mouth (9); an inlet for water under pressure (10) for spraying by the Venturi effect; a duct (6) for evacuation eliminating overpressures during the spraying and/or capture of hazardous fumes; an additional duct (7) for introduction of accessories; and a water outlet mouth (12) inside the sprayer pipe (5) for the atomisation.
